(19) Europäisches Patentamt
European Patent Office
Office européen des brevets

(11) **EP 4 032 922 A1**

(12) **EUROPEAN PATENT APPLICATION**
published in accordance with Art. 153(4) EPC

(43) Date of publication:
**27.07.2022 Bulletin 2022/30**

(21) Application number: **20866665.1**

(22) Date of filing: **25.06.2020**

(51) International Patent Classification (IPC):
**C08F 283/01** (2006.01)

(52) Cooperative Patent Classification (CPC):
**C08F 283/01**

(86) International application number:
**PCT/JP2020/025101**

(87) International publication number:
**WO 2021/053922 (25.03.2021 Gazette 2021/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2019 JP 2019168265**

(71) Applicant: **Showa Denko K.K.
Tokyo 105-8518 (JP)**

(72) Inventor: **HARADA, Yusuke
Tokyo 105-8518 (JP)**

(74) Representative: **Strehl Schübel-Hopf & Partner
Maximilianstrasse 54
80538 München (DE)**

(54) **THERMOSETTING RESIN COMPOSITION AND ELECTRICAL/ELECTRONIC COMPONENT WHICH CONTAINS CURED PRODUCT OF SAME**

(57)     The present invention provides a thermosetting resin composition which enables the achievement of a cured product having flame retardancy, while being capable of retaining good fluidity for a long period of time. A thermosetting resin composition which contains (A) an unsaturated polyester resin, (B) an ethylenically unsaturated compound, (C) glass fibers and (D) an inorganic filler, wherein the component (D) satisfies the conditions described below. (1) The inorganic filler (D) is composed of aluminum hydroxide particles. (2) $0.2 \leq Ct \times (Da/Db) \leq 2.0$ (In the formula, Ct represents the content (mass ratio) of the inorganic filler (D) in the thermosetting resin composition; Da represents the specific surface area $(m^2/g)$ of the inorganic filler (D) as determined by a BET method; and Db represents the ideal specific surface area $(m^2/g)$ of the inorganic filler (D) as calculated from the median diameter.)

EP 4 032 922 A1

**Description**

FIELD

The present disclosure relates to a thermosetting resin composition, an electric/electronic component comprising a cured product thereof, and a method for producing the electric/electronic component. In particular, the present disclosure relates to a thermosetting resin composition that can be used for encapsulating a component, such as a motor, a coil, etc., an electric/electronic component comprising a cured product thereof, and a method for producing the electric/electronic component.

BACKGROUND

Since a thermosetting resin composition in which a fiber reinforcement or an inorganic filler is blended with an unsaturated polyester resin has good fluidity and provides a cured product having excellent dimensional accuracy, heat resistance, and mechanical strength, it is widely used in the manufacture of OA equipment, a chassis for office equipment, a lamp reflector for an automobile headlamp, an encapsulated motor, etc.
Among these, when a component, such as a motor and a coil, is encapsulated in an electric/electronic component, the cured product of the thermosetting resin composition is required to be flame retardant for safety and reliability in use. As a method for imparting flame retardancy, it is generally carried out to add a metal hydroxide, among them, aluminum hydroxide to the resin. Although this is a simple and inexpensive method, it is necessary to add a large amount of metal hydroxide in order to impart flame retardancy, and in this case, fluidity of the thermosetting resin composition decreases. If the fluidity of the thermosetting resin composition is low, the encapsulated component may move from the initial position due to the resin pressure during encapsulating, and the encapsulated component may be damaged due to the occurrence of disconnection, short-circuit, etc.
Patent Literature 1 describes aluminum hydroxide having a small specific surface area, which is used to provide a resin having a low viscosity even when it is highly filled therein.

[CITATION LIST]

[PATENT LITERATURE]

[PTL 1] JP H1-275422 A

SUMMARY

[TECHNICAL PROBLEM]

However, when an inorganic filler represented by a metal hydroxide is filled as in Patent Literature 1, there has been a problem that since the viscosity of the thermosetting resin composition changes due to a change in the wetting state of the filler, the progress of oil absorption, aggregation, etc., the fluidity of the thermosetting resin composition decreases when stored for a long period of time.
Accordingly, it is an object of the present invention to provide a thermosetting resin composition in which the composition can retain good fluidity for a long period of time, and a cured product thereof has flame retardancy.

[SOLUTION TO PROBLEM]

As a result of intensive study to solve the above problems, the present inventor has found that the present object can be achieved by controlling the blending amount and the shape of a metal hydroxide in the thermosetting resin composition, and has completed the present invention.
That is, the present invention includes the following [1] to [6].

[1] A thermosetting resin composition comprising (A) an unsaturated polyester resin, (B) an ethylenically unsaturated compound, (C) a glass fiber, and (D) an inorganic filler, wherein the (D) satisfies the following conditions that:

(1) the (D) inorganic filler is an aluminum hydroxide particle, and
(2) $0.2 \leq Ct \times (Da / Db) \leq 2.0$, wherein

Ct is a content rate of the (D) inorganic filler in the thermosetting resin composition (mass ratio),

Da is a specific surface area (m$^2$/g) of the (D) inorganic filler as determined by the BET method, and

Db is an ideal specific surface area (m$^2$/g) of the (D) inorganic filler calculated from the median diameter.

[2] The thermosetting resin composition according to [1], further comprising (E) a low shrinkage agent.

[3] The thermosetting resin composition according to [1] or [2], further comprising (F) a curing agent.

[4] The thermosetting resin composition according to any one of [1] to [3], further comprising (G) a mold release agent.

[5] An electric/electronic component comprising a cured product of the thermosetting resin composition according to any one of [1] to [4].

[6] A method for producing an electric/electronic component comprising the steps of encapsulating a constituent part of the electric/electronic component with the thermosetting resin composition according to any one of [1] to [4], and heat-curing the thermosetting resin composition.

[ADVANTAGEOUS EFFECTS OF INVENTION]

According to the present disclosure, it is possible to provide a thermosetting resin composition in which the composition can retain good fluidity for a long period of time, and a cured product thereof has flame retardancy.

DESCRIPTION OF EMBODIMENTS

Hereinafter, the thermosetting resin composition of the present disclosure will be described in detail. Note that the present invention is not limited to only the embodiments described below.

In the following description, "ethylenically unsaturated bond" means a double bond formed between carbon atoms excluding carbon atoms forming an aromatic ring, and "ethylenically unsaturated compound" means a compound having an ethylenically unsaturated bond.

"(Meth)acrylate" means acrylate or methacrylate, "(meth)acryl" means acryl or methacryl, and "(meth)acryloyl" means acryloyl or methacryloyl.

<1. Thermosetting resin composition>

A thermosetting resin composition according to one embodiment comprises (A) an unsaturated polyester resin, (B) an ethylenically unsaturated compound, (C) a glass fiber, and (D) an inorganic filler.

[(A) Unsaturated polyester resin]

The (A) unsaturated polyester resin is obtained by polycondensing a polyhydric alcohol and an unsaturated polybasic acid and optionally a saturated polybasic acid, and is not particularly limited. The unsaturated polybasic acid is a polybasic acid having an ethylenically unsaturated bond, and the saturated polybasic acid is a polybasic acid having no ethylenically unsaturated bond. The (A) unsaturated polyester resin may be used alone or in combination of two or more thereof. Note that, in the present disclosure, styrene monomers and the like contained in a general unsaturated polyester resin are classified into the (B) ethylenically unsaturated compound.

The polyhydric alcohol is not particularly limited as long as it is a compound having two or more hydroxy groups. Examples of the polyhydric alcohol include alkylene glycols, such as ethylene glycol, propylene glycol, butanediol, diethylene glycol, dipropylene glycol, triethylene glycol, pentanediol, hexanediol, neopentanediol, tetraethylene glycol, polyethylene glycol, 2-methyl-1,3-propanediol, 1,4-cyclohexanedimethanol, and hydrogenated bisphenol A; alkylene oxide modified bisphenol A, such as an ethylene oxide adduct of bisphenol A, and a propylene oxide adduct of bisphenol A; bisphenol A, and glycerin. Among these, propylene glycol, neopentanediol, hydrogenated bisphenol A and bisphenol A are preferred, and propylene glycol is more preferred, from the viewpoint of heat resistance, and mechanical strength of a cured product, and resin fluidity at the time of forming. The polyhydric alcohol may be used alone or in combination of two or more thereof.

The unsaturated polybasic acid is not particularly limited as long as it is a compound having an ethylenically unsaturated bond and having two or more carboxy groups or an acid anhydride thereof. Examples of the unsaturated polybasic acid include maleic acid, maleic anhydride, fumaric acid, citraconic acid, itaconic acid, and chloromaleic acid. Among these, maleic anhydride and fumaric acid are preferred, from the viewpoint of heat resistance, and mechanical strength of a cured product, resin fluidity at the time of forming, etc. The unsaturated polybasic acid may be used alone or in combination of two or more thereof.

The saturated polybasic acid is not particularly limited as long as it is a compound having no ethylenically unsaturated bond and having two or more carboxy groups or an acid anhydride thereof. Examples of the saturated polybasic acid include phthalic acid, phthalic anhydride, isophthalic acid, terephthalic acid, succinic acid, adipic acid, sebacic acid, tetrachlorophthalic anhydride, tetrabromophthalic anhydride, nitrophthalic acid, halogenated phthalic anhydride, oxalic acid, malonic acid, azelaic acid, glutaric acid, hexahydroterephthalic acid, hexahydrophthalic acid, and hexahydrophthalic anhydride. Among these, phthalic acid, phthalic anhydride, isophthalic acid, terephthalic acid, succinic acid and adipic acid are preferred, and phthalic anhydride and isophthalic acid are more preferred, from the viewpoint of heat resistance, and mechanical strength of a cured product, resin fluidity at the time of forming, etc. The saturated polybasic acid may be used alone or in combination of two or more thereof.

The (A) unsaturated polyester resin can be synthesized by known methods using raw materials as described above. Conditions in the synthesis of the (A) unsaturated polyester resin can be appropriately determined according to the raw materials used and the amounts thereof, and in general, an esterification reaction in an inert gas stream, such as nitrogen gas, at a temperature of 140 to 230°C under pressure or reduced pressure can be used. In the esterification reaction, an esterification catalyst may be used if necessary. Examples of the esterification catalyst include known catalysts, such as manganese acetate, dibutyltin oxide, tin(II) oxalate, zinc acetate, and cobalt acetate. The esterification catalyst may be used alone or in combination of two or more thereof.

The weight average molecular weight (Mw) of the (A) unsaturated polyester resin is not particularly limited. The weight average molecular weight of the (A) unsaturated polyester resin is preferably 3,000 to 25,000, more preferably 5,000 to 20,000, and further preferably 7,000 to 18,000. When the weight average molecular weight is 3,000 to 25,000, formability of the thermosetting resin composition is further improved. Note that "weight average molecular weight" in the present disclosure means a value measured using gel permeation chromatography (GPC) at normal temperature (23°C) under the following conditions, and determined using a standard polystyrene calibration curve.

Apparatus: Shodex (trademark) GPC-101 manufactured by Showa Denko K.K.

Column: LF-804 manufactured by Showa Denko K.K.
Column temperature: 40°C
Sample: 0.2% by mass solution of the (A) unsaturated polyester resin in tetrahydrofuran Flow rate 1 mL/min
Eluent: tetrahydrofuran
Detector: RI-71S

The unsaturation degree of the (A) unsaturated polyester resin is preferably 50 to 100 mol%, more preferably 60 to 100 mol%, and further preferably 70 to 100 mol%. When the unsaturation degree is within the above range, formability of the thermosetting resin composition is further improved. The unsaturation degree of the (A) unsaturated polyester resin can be calculated by the following formula using the numbers of moles of the unsaturated polybasic acid and the saturated polybasic acid used as raw materials.

$$\text{Unsaturation degree (mol\%)} = [(\text{number of moles of unsaturated polybasic acid} \times \text{number of ethylenically unsaturated bonds per molecule of unsaturated polybasic acid}) / (\text{number of moles of unsaturated polybasic acid} + \text{number of moles of saturated polybasic acid})] \times 100$$

[(B) Ethylenically unsaturated compound]

The (B) ethylenically unsaturated compound can be used without any particular limitation as long as it has an ethylenically unsaturated bond copolymerizable with the (A) unsaturated polyester resin. The (B) ethylenically unsaturated compound may have one or more ethylenically unsaturated bonds. Examples of the (B) ethylenically unsaturated compound include aromatic monomers, such as styrene, vinyltoluene, $\alpha$-methylstyrene, and divinylbenzene; monomers having a (meth)acryloyl group, such as 2-hydroxyethyl methacrylate, diacrylates of polyalkyleneoxides, triethylene glycol di(meth)acrylate, tetraethylene glycol di(meth)acrylate, tripropylene glycol di(meth)acrylate, ethyl (meth)acrylate, and methyl (meth)acrylate; monomers having an alkenyl group, such as diallyl phthalate, triallyl isocyanurate, and a diallyl phthalate prepolymer; and oligomers in which a plurality of the above monomers are bonded together. Among these, from the viewpoint of reactivity with the (A) unsaturated polyester resin, styrene and methyl (meth)acrylate are preferred, and styrene is particularly preferred. The (B) ethylenically unsaturated compound may be used alone or in combination of two or more thereof.

The content of the (B) ethylenically unsaturated compound is preferably 25% by mass or more with respect to the total of the (A) unsaturated polyester resin and the (B) ethylenically unsaturated compound. This can make the thermosetting resin composition have a viscosity for easy handling. From this viewpoint, the content of the (B) ethylenically unsaturated compound is more preferably 30% by mass or more, and still more preferably 35% by mass or more.

The content of the (B) ethylenically unsaturated compound is preferably 70% by mass or less with respect to the total of the (A) unsaturated polyester resin and the (B) ethylenically unsaturated compound. This can make a cured product of the thermosetting resin composition have improved mechanical strength. From this viewpoint, the content of the (B) ethylenically unsaturated compound is more preferably 68% by mass or less, and still more preferably 65% by mass or less.

[(C) Glass fiber]

The (C) glass fiber is a fibrous substance having an aspect ratio of 3 or more. Examples of the glass fiber include chopped strand glass. The fiber length of the (C) glass fiber is preferably 20 mm or less, more preferably 6 mm or less, and still more preferably 2 mm or less.

The blending amount of the (C) glass fiber is preferably 20 to 150 parts by mass, more preferably 30 to 100 parts by mass, and still more preferably 50 to 90 parts by mass, with respect to 100 parts by mass of the total of the (A) unsaturated polyester resin, and the (B) ethylenically unsaturated compound. When the blending amount of the (C) glass fiber is 20 parts by mass or more, the mechanical properties of a formed article obtained from the thermosetting resin composition are further improved. On the other hand, when the blending amount of the (C) glass fiber is 150 parts by mass or less, since the glass fiber is more uniformly dispersed in the thermosetting resin composition, a homogeneous formed article can be produced.

[(D) Inorganic filler]

By using an aluminum hydroxide particle as the (D) inorganic filler, flame retardancy can be imparted to a cured product of the thermosetting resin composition. The content rate Ct of the inorganic filler needs to satisfy the following conditional formula.

$$0.2 \leq Ct \times (Da / Db) \leq 2.0$$

Ct: Content rate of the (D) inorganic filler in the thermosetting resin composition (mass ratio)
Da: Specific surface area ($m^2$/g) of the (D) inorganic filler as determined by the BET method
Db: Ideal specific surface area ($m^2$/g) of the (D) inorganic filler calculated from the median diameter

When a plurality of the (D) inorganic fillers are used, the ratio Da/Db of the BET specific surface area Da to the ideal specific surface area Db is obtained by dividing the total surface area of the (D) inorganic filler contained in the thermosetting resin composition by the total ideal surface area thereof. For example, when two types of the (D) inorganic fillers $\alpha$ and $\beta$ are used, Da/Db can be calculated as follows.

$$Da/Db = (W(\alpha) \times Da(\alpha) + W(\beta) \times Da(\beta)) / (W(\alpha) \times Db(\alpha) + W(\beta) \times Db(\beta))$$

W($\alpha$) and W($\beta$) are the contents (g) of the (D) inorganic fillers of $\alpha$, $\beta$ in the thermosetting resin composition, respectively. The same applies to Da($\alpha$), Da($\beta$), and the like.

As to the specific surface area of the (D) inorganic filler, there is a deviation between the theoretical value calculated by assuming that the (D) inorganic filler is perfectly spherical and the actual value measured by the BET method. The present inventor has found that, when comparing particles having the same median diameter, as the actual measured value of the specific surface area (Da) deviates from the theoretical value (Db), the (D) inorganic filler is less likely to be wettable with the resin, and the ratio of the surface area initially wetted by the resin to the surface area of the (D) inorganic filler relatively decreases. Further, the present inventor has found that, by keeping a large amount of resin present on the surface of the (D) inorganic filler (contact area between the resin and the (D) inorganic filler) from the initial stage, it is possible to suppress a change in viscosity (lowering of the fluidity retention rate) when the thermosetting resin composition is stored for a long period of time. This suppression of the viscosity change is considered to be related to the wettability of the resin to the (D) inorganic filler. In other words, it is considered that, when the amount of resin present on the surface of the (D) inorganic filler is kept constant over a long period of time, the viscosity change is suppressed. On the other hand, it is considered that when the amount of resin present on the surface of the (D) inorganic filler is small, that is, when the entire surface of the (D) inorganic filler is not completely wetted with the resin immediately after preparation of the thermosetting resin composition, the contact area between the resin and the (D) inorganic filler changes over time, which leads to a decrease in the fluidity retention rate of the thermosetting resin composition. As compared with the conventional idea that the fluidity of the thermosetting resin composition generally depends on the median diameter of the (D) inorganic filler, the findings of the present inventor regarding the relationship between the above mentioned fluidity retention rate and the specific surface area of the (D) inorganic filler are novel.

Ct × (Da / Db) is 0.2 or more, preferably 0.5 or more, more preferably 1.0 or more, and still more preferably 1.2 or more. Ct × (Da / Db) may be 2.0 or less, 1.9 or less, or 1.8 or less.

The content rate Ct of the (D) inorganic filler is determined by the mass ratio of the blending amount of the (D) inorganic filler to the total amount of the thermosetting resin composition. Ct is preferably 0.2 to 0.8, and more preferably 0.3 to 0.7. When Ct is 0.2 or more, flame retardancy of a cured product is further improved. On the other hand, when Ct is 0.8 or less, since the (D) inorganic filler is more uniformly dispersed in the thermosetting resin composition, a thermosetting resin composition which is homogeneous and has good fluidity can be produced.

The specific surface area Da ($m^2/g$) is a specific surface area of the (D) inorganic filler measured by the BET method. In the present disclosure, "specific surface area measured by the BET method" means a surface area per mass of a measuring object, which is determined by an adsorption amount of nitrogen measured using a fully automated specific surface area measuring device (Macsorb (trademark) HM model-1200 manufactured by Mountec Co., Ltd.)

The ideal specific surface area Db ($m^2/g$) is a value calculated by the following formula using the median diameter described later.

$$Db = \text{(surface area of the sphere determined by the median diameter } (m^2))$$
$$/ \text{ (volume of sphere determined by median diameter } (m^3)) \times \text{(the (D) inorganic filler density}$$
$$(g/m^3))$$

In the present disclosure, "median diameter" means a particle diameter corresponding to a 50% cumulative particle diameter in the volume-based particle size distribution determined by a laser diffraction and scattering method using a laser diffraction-scattering particle size distribution measuring apparatus (Microtrac (trademark) MT3000II manufactured by MicrotracBEL Corporation).

The measurement of the particle size distribution is carried out, using water as a solvent, by applying an output of 40W using a homogenizer for 2 minutes to perform a dispersion treatment of the powder as a pretreatment, and then adjusting the concentration of sodium hexametaphosphate of the dispersion so as to be 0.03% by mass. The refractive index value of water is assumed 1.33, and the refractive index of the material of the powder is considered for the refractive index value of the powder. For example, with respect to aluminum hydroxide, the particle size distribution is measured assuming that the refractive index value is 1.57.

The median diameter of the (D) inorganic filler is preferably 1 to 100 $\mu$m, more preferably 1 to 60 $\mu$m, still more preferably 1 to 50 $\mu$m, and particularly preferably 1 to 30 $\mu$m, from the viewpoint of the viscosity of the thermosetting resin composition at the time of forming. When the median diameter of the (D) inorganic filler is 1 $\mu$m or more, aggregation of the particles can be suppressed. On the other hand, when the median diameter of the (D) inorganic filler is 100 $\mu$m or less, formability of the thermosetting resin composition is favorable. Among them, two or more types of the (D) inorganic fillers having different ranges of median diameters are preferably mixed and used, and the (D) inorganic filler having a median diameter of 1 to 5 $\mu$m and the (D) inorganic filler having a median diameter of 7 $\mu$m or more are particularly preferably mixed and used, from the viewpoint of improving fluidity of the thermosetting resin composition.

The shape of the (D) inorganic filler is not particularly limited. Examples of the shape of the (D) inorganic filler include spherical, substantially true spherical, ellipsoidal, scaly, amorphous, etc. From the viewpoint of reducing the BET specific surface area Da, it is preferable that the shape be close to a spherical shape.

[(E) Low shrinkage agent]

(E) A low shrinkage agent may be added to the thermosetting resin composition. The (E) low shrinkage agent is not particularly limited, and known ones in the technical field of the present invention can be used. Among them, a thermoplastic resin is preferred. Examples of the (E) low shrinkage agent include polystyrene, polyethylene, polymethyl methacrylate, polyvinyl acetate, saturated polyester, polycaprolactone, and styrene-butadiene rubber. The (E) low shrinkage agent may be used alone or in combination of two or more thereof.

The blending amount of the (E) low shrinkage agent is preferably 20 to 40 parts by mass with respect to 100 parts by mass of the total of the (A) unsaturated polyester resin, and the (B) ethylenically unsaturated compound. When the blending amount of the (E) low shrinkage agent is 20 parts by mass or more, the shrinkage ratio of a cured product is small, and a desired dimensional accuracy can be obtained in a formed article. On the other hand, when the blending amount of the (E) low shrinkage agent is 40 parts by mass or less, the mechanical properties of a cured product are further improved.

[(F) Curing agent]

(F) A curing agent may be added to the thermosetting resin composition. The (F) curing agent is not particularly limited as long as it is a radical initiator capable of polymerizing an ethylenically unsaturated bond, and known ones in the technical field of the present invention can be used. Examples of the (F) curing agent include peroxides, such as diacyl peroxides, peroxy esters, hydroperoxides, dialkyl peroxides, ketone peroxides, peroxy ketals, alkyl peresters, and percarbonates. Among these peroxides, 1,1-di-t-hexyl peroxy-cyclohexane, t-hexyl peroxy isopropyl monocarbonate, t-butyl peroxyoctoate, t-butyl peroxy-2-ethylhexanoate, t-hexyl peroxy-2-ethylhexanoate, benzoyl peroxide, 1,1-di-t-butyl-peroxy-3,3,5-trimethylcyclohexane, t-butyl peroxyisopropyl carbonate, t-butyl peroxybenzoate, dicumyl peroxide, and di-t-butyl peroxide are preferred. The (F) curing agent may be used alone or in combination of two or more thereof.

The blending amount of the (F) curing agent is preferably 1 to 10 parts by mass, more preferably 2 to 9 parts by mass, and still more preferably 3 to 8 parts by mass, with respect to 100 parts by mass of the total of the (A) unsaturated polyester resin and the (B) ethylenically unsaturated compound. When the blending amount of the (F) curing agent is 1 parts by mass or more, a curing reaction at the time of forming occurs uniformly, and the physical properties and appearance of a cured product are favorable. On the other hand, when the blending amount of the (F) curing agent is 10 parts by mass or less, the storage stability of the thermosetting resin composition is further improved, and the handleability is improved.

[(G) Mold release agent]

(G) A mold release agent may be added to the thermosetting resin composition. The (G) mold release agent is not particularly limited, and known ones in the technical field of the present invention can be used. Examples of the (G) mold release agent include stearic acid, oleic acid, zinc stearate, calcium stearate, aluminum stearate, magnesium stearate, stearamide, oleamide, silicone oil, and synthetic wax. The (G) mold release agent may be used alone or in combination of two or more thereof.

The blending amount of the (G) mold release agent is preferably 5 to 20 parts by mass with respect to 100 parts by mass of the total of the (A) unsaturated polyester resin and the (B) ethylenically unsaturated compound. When the blending amount of the (G) mold release agent is 5 parts by mass or more, the mold releasability of a formed article at the time of mold forming is favorable, and the productivity of a product is favorable. On the other hand, when the blending amount of the (G) mold release agent is 20 parts by mass or less, a formed article having good appearance can be obtained without contaminating the surface of the formed article with the excessive mold release agent.

[Other Additives]

In addition to the above components, the thermosetting resin composition may contain components known in the technical field of the present invention, such as a thickener, a colorant, a polymerization inhibitor, and a viscosity reducing agent within a range that does not impair the effect of the present invention.

The thickener is a compound exhibiting a thickening effect other than the (D) inorganic filler, and examples thereof include an isocyanate compound. The thickener may be used alone or in combination of two or more thereof. The added amount of the thickener can be appropriately adjusted depending on the handleability, fluidity, etc., required for the thermosetting resin composition.

The colorant is used in a case where a cured product is colored. Various kinds of dyes, inorganic pigments or organic pigments can be used as the colorant. The colorant may be used alone or in combination of two or more thereof. The added amount of the colorant can be appropriately adjusted depending on the degree of coloring desired for the cured product.

Examples of the polymerization inhibitor include hydroquinone, trimethylhydroquinone, p-benzoquinone, naphthoquinone, t-butylhydroquinone, catechol, p-t-butylcatechol, and 2,6-di-t-butyl-4-methylphenol. The polymerization inhibitor may be used alone or in combination of two or more thereof. The added amount of the polymerization inhibitor can be appropriately adjusted depending on the storage environment and period, the curing condition, etc., of the thermosetting resin composition.

<2. Method for producing thermosetting resin composition>

The thermosetting resin composition can be produced by mixing the (A) unsaturated polyester resin, the (B) ethylenically unsaturated compound, the (C) glass fiber, and the (D) inorganic filler, and, if necessary, the (E) low shrinkage agent, the (F) curing agent, the (G) mold release agent, or the additive, which are optional components, or a combination of two or more thereof. Examples of the mixing method include kneading. There is no particular limitation on the kneading method, and for example, a kneader, a disper, a planetary mixer, etc., can be used. The kneading temperature is preferably 5°C to 50°C, and more preferably 10°C to 40°C.

There is no particular limitation on the order in which each component is mixed in producing the thermosetting resin composition. For example, when the (A) unsaturated polyester resin and a part or all of the (B) ethylenically unsaturated compound are mixed and then other components are mixed, a thermosetting resin composition in which each component is sufficiently dispersed or uniformly mixed is easily obtained, which is preferable. At least a part of the (B) ethylenically unsaturated compound may be mixed in advance with the (A) unsaturated polyester resin, so as to serve as a solvent or dispersion medium.

Examples of the method of mixing the (C) glass fiber include a method in which glass fibers having a predetermined fiber length distribution are prepared in advance, and the (C) glass fibers are mixed into a composition containing each component other than the (C) glass fibers. According to this method, the fiber length distribution of the (C) glass fiber can be finely adjusted. Other examples thereof include a method in which a thermosetting resin composition containing the (C) glass fibers is prepared, and then the glass fibers are broken by kneading to obtain a predetermined fiber length distribution. The fiber length distribution of the (C) glass fiber can be controlled by changing conditions, such as the types and amounts of other components to be kneaded, the type of stirrer, the stirring speed, the stirring temperature, and the stirring time. Since it is not necessary to break the glass fibers in advance in this method, the process is simple.

<3. Method for producing cured product>

The thermosetting resin composition can be cured, by heating if necessary. The condition for curing the thermosetting resin composition can be appropriately set depending on the material used, and a preferred condition includes, for example, a temperature of 120 to 180°C, and a curing time of 1 to 30 minutes.

<4. Method for producing formed article>

A formed article comprising a cured product of the thermosetting resin composition can be produced by forming the thermosetting resin composition into a desired shape, and curing it. The forming and curing method is not particularly limited, and methods commonly carried out in the technical field of the present invention, for example, compression molding, transfer molding, injection molding, etc., can be used.

The method of forming and curing the thermosetting resin composition is not particularly limited, and for example, there is a method of opening a mold, pouring the thermosetting resin composition into the mold, and curing it, or a method of depressurizing a mold or applying pressure from the outside of a mold, as typified by injection molding, injecting the thermosetting resin composition into the closed mold from the outside through a hole provided in the mold, such as a spool, and curing it. The condition for curing the thermosetting resin composition in the mold can be appropriately set depending on the material used, and a preferred condition includes, for example, a temperature of 120 to 180°C, and a curing time of 1 to 30 minutes.

In one embodiment, an electric/electronic component comprising a cured product of the thermosetting resin composition is provided. The electric/electronic component can be produced, for example, by encapsulating a constituent part of the electric/electronic component with the thermosetting resin composition, and heat-curing the thermosetting resin composition. The encapsulation of the constituent part of the electric/electronic component can be carried out, for example, by injecting the thermosetting resin composition into a housing having the constituent part therein.

EXAMPLES

Hereinafter, the present invention will be described in detail with reference to Examples and Comparative Examples, but is not limited thereto.

< 1. Component>

(B) Ethylenically unsaturated compound: styrene
(C) Glass Fiber: chopped strand glass CS2HB-406S manufactured by Nitto Boseki Co., Ltd. (1.5 mm fiber length)
(D') Aluminum oxide: AL-47-1 (spherical) manufactured by Showa Denko K.K.
(E) Low shrinkage agent: polystyrene MS-200 manufactured by Sekisui Kasei Co., Ltd.
(F) Curing agent: PERHEXYL O (t-hexyl peroxy-2-ethylhexanoate) manufactured by NOF Corporation
(G) Mold release agent: calcium stearate manufactured by NOF Corporation

<2. Synthesis of the (A) unsaturated polyester resin >

To a four-necked flask equipped with a thermometer, a stirrer, an inert gas inlet, and a reflux condenser, 0.93 kg (9.5 mol) of maleic anhydride, 0.07 kg (0.5 mol) of phthalic anhydride, and 0.76 kg (10 mol) of propylene glycol were charged. Then, an esterification reaction was carried out by raising the temperature to 200°C while being heated and stirred under a stream of nitrogen gas to obtain an unsaturated polyester resin A-1. Thereafter, a styrene monomer was added so as to be 30% by mass with respect to the total of the unsaturated polyester resin A-1 and the styrene monomer to obtain a mixture of the unsaturated polyester resin A-1 and styrene. The obtained unsaturated polyester resin A-1 had an unsaturation degree of 95 mol% and a weight average molecular weight of 8,000.

<3. Producing of the (D) inorganic filler>

Sodium hydroxide was dissolved in purified water to prepare a solution having a NaOH concentration of 150 g/L. Aluminum hydroxide was heated and dissolved in this solution to prepare a supersaturated sodium aluminate solution. An aluminum hydroxide seed crystal was added to the above sodium aluminate solution, and precipitation was carried out while keeping the temperature of the solution at 70°C or higher to obtain a precipitated aluminum hydroxide. The precipitated aluminum hydroxide was separated from the solution by vacuum filtration, washed with purified water, and then dried at 100°C. Thereafter, it was ground by a bead mill to obtain aluminum hydroxide particles (densities 2.4 g/cm$^3$) of the inorganic fillers a to f described in Table 1.

<4. Preparation of thermosetting resin composition>

Examples 1 to 6 and Comparative Examples 1 to 5

Components excluding the glass fiber in the formulation shown in Table 1 were charged into a double arm kneader and kneaded at 40°C for 30 minutes. Styrene was further added at such a stage to be the formulation shown in Table 1. Thereafter, the glass fiber was added and kneaded for 20 minutes to obtain thermosetting resin compositions of Examples 1 to 6 and Comparative Examples 1 to 5.

<5. Evaluation method of thermosetting resin composition>

Various property evaluations were carried out on the thermosetting resin compositions obtained in Examples 1 to 6 and Comparative Examples 1 to 5, and the formed articles thereof by the following test methods. These evaluation results are shown in Table 1.

(1) Fluidity

A thermosetting resin composition in which 24 hours elapsed after preparation was used to evaluate fluidity. A flow length (cm) (spiral flow value) by a spiral flow test of the thermosetting resin composition was used as an indicator of fluidity. A spiral flow mold having a flow path cross-sectional shape of trapezoidal (upper bottom a = 6 mm, lower bottom b = 8 mm, height h = 2 mm (all inner diameter)), was attached to a 70 t transfer molding machine, and the spiral flow test was carried out under the conditions of raw material charge amount of 50 g, molding temperature of 140°C, and molding pressure of 5 MPa to measure a spiral flow value. The larger the spiral flow value is, the higher the fluidity is.

(2) Fluidity retention rate

The thermosetting resin composition was allowed to stand in an environment of 20°C, and a spiral flow value was measured 30 days after the preparation of the thermosetting resin composition. A fluidity retention rate was determined by the ratio of the value measured on the day of preparation of the thermosetting resin composition and the value measured 30 days after the preparation. The higher the fluidity retention rate is, the more the fluidity is maintained even after long-term storage.

(3) Flame retardant test

A flat plate of 320 mm × 220 mm × 3 mm was molded using 340 g of the thermosetting resin composition in a compression molding mold heated to 160°C under conditions of a pressing time of 5 minutes and a molding pressure of 10 MPa. After curing, the molded article was taken out of the mold, and cut into a test piece of (125 ± 5) mm × (13 ± 0.5) mm × 3 mm. Evaluations were carried out by a vertical burning test in accordance with UL94 V-0 standard, and in Table 1 below, those satisfying the V-0 standard were expressed as available, and those not satisfying the V-0 standard were expressed as not available.

Table 1

| Composition [parts by mass] | | | Specific surface area Da [m^2/g] | Median diameter [μm] | Ideal specific surface area Db [m^2/g] | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|---|---|
| | D Inorganic filler | Inorganic filler a | 0.5 | 8.5 | 0.29 | 375 | | | 200 | | | | | | 125 | |
| | | Inorganic filler b | 0.9 | 10 | 0.25 | | 375 | | | | | | | | | |
| | | Inorganic filler c | 1.5 | 9.1 | 0.27 | | | 375 | | | | | | | | 750 |
| | | Inorganic filler d | 3.0 | 7.5 | 0.33 | | | | | 150 | | | 375 | | 250 | |
| | | Inorganic filler e | 3.1 | 8.6 | 0.29 | | | | | | | | | 375 | | |
| | | Inorganic filler f | 3.4 | 1.4 | 1.77 | 125 | 125 | 125 | 300 | 50 | 500 | | 125 | 125 | 125 | 250 |
| | D' Aluminum oxide | | 4.0 | 1.0 | 2.48 | | | | | | | 500 | | | | |
| | A Unsaturated polyester resin | Unsaturated Polyester Resin A-1 | | | | 70 | 70 | 70 | 70 | 70 | 70 | 70 | 70 | 70 | 70 | 70 |
| | B Ethylenicall yunsaturated compound | Styrene | | | | 70 | 70 | 70 | 70 | 70 | 70 | 70 | 70 | 70 | 70 | 70 |
| | C Glass fiber | Chopped strand glass | | | | 100 | 100 | 100 | 100 | 100 | 100 | 100 | 100 | 100 | 100 | 100 |
| | E Low shrinkage agent | Polystyrene | | | | 40 | 40 | 40 | 40 | 40 | 40 | 40 | 40 | 40 | 40 | 40 |
| | F Curing agent | PERHEXYL O | | | | 10 | 10 | 10 | 10 | 10 | 10 | 10 | 10 | 10 | 10 | 10 |
| | G Mold release agent | Calcium stearate | | | | 10 | 10 | 10 | 10 | 10 | 10 | 10 | 10 | 10 | 10 | 10 |
| Calculated value | Ct | | | | | 0.63 | 0.63 | 0.63 | 0.63 | 0.40 | 0.63 | - | 0.63 | 0.63 | 0.63 | 0.77 |
| | Ct × (Da / Db) | | | | | 1.2 | 1.5 | 1.9 | 1.2 | 1.8 | 1.2 | - | 2.8 | 3.0 | 2.3 | 2.4 |
| Results | Fluidity [cm] | | | | | 85 | 69 | 70 | 75 | 88 | 60 | 85 | 76 | 73 | 80 | 90 |
| | Fluidity retention rate after 30 days at 20°C [%] | | | | | 98 | 97 | 97 | 98 | 97 | 98 | 98 | 85 | 85 | 94 | 93 |
| | Flame retardancy | | | | | Available | Available | Available | Available | Available | Available | Not Available | Available | Available | Available | Available |

From Table 1, with respect to the thermosetting resin composition satisfying the following formula, the fluidity after 30 days was sufficiently retained, and further, the flame retardancy was also favorable.

$$0.2 \le Ct \times (Da / Db) \le 2.0$$

**Claims**

1. A thermosetting resin composition comprising (A) an unsaturated polyester resin, (B) an ethylenically unsaturated compound, (C) a glass fiber, and (D) an inorganic filler,

   wherein the (D) satisfies the following conditions that:

   (1) the (D) inorganic filler is an aluminum hydroxide particle, and
   (2) $0.2 \le Ct \times (Da/Db) \le 2.0$, wherein

   Ct is a content rate of the (D) inorganic filler in the thermosetting resin composition (mass ratio),
   Da is a specific surface area ($m^2/g$) of the (D) inorganic filler as determined by the BET method, and
   Db is an ideal specific surface area ($m^2/g$) of the (D) inorganic filler calculated from the median diameter.

2. The thermosetting resin composition according to claim 1, further comprising (E) a low shrinkage agent.

3. The thermosetting resin composition according to claim 1 or 2, further comprising (F) a curing agent.

4. The thermosetting resin composition according to any one of claims 1 to 3, further comprising (G) a mold release agent.

5. An electric/electronic component comprising a cured product of the thermosetting resin composition according to any one of claims 1 to 4.

6. A method for producing an electric/electronic component comprising the steps of encapsulating a constituent part of the electric/electronic component with the thermosetting resin composition according to any one of claims 1 to 4, and heat-curing the thermosetting resin composition.

**INTERNATIONAL SEARCH REPORT**

International application No.

PCT/JP2020/025101

A. CLASSIFICATION OF SUBJECT MATTER
Int. Cl. C08F283/01(2006.01)i
FI: C08F283/01

According to International Patent Classification (IPC) or to both national classification and IPC

B. FIELDS SEARCHED

Minimum documentation searched (classification system followed by classification symbols)
Int. Cl. C08F283/01

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-173813 A (PANASONIC ELECTRIC WORKS CO., LTD.) 06 August 2009, claims 1-2, paragraphs [0031]-[0038], examples 1-3, comparative examples 1-4 | 1-6 |
| X | WO 2016/080040 A1 (SHOWA DENKO KABUSHIKI KAISHA) 26 May 2016, claims 1-3, paragraphs [0039]-[0066], examples 1-11, comparative examples 2, 4, 6 | 1-6 |
| X | JP 63-041562 A (HITACHI CHEMICAL CO., LTD.) 22 February 1988, claim 1, page 2, lower left column, line 1 to page 5, upper right column, line 13 | 1-4 |
| A | | 5-6 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07.09.2020 | 15.09.2020 |

| Name and mailing address of the ISA/<br>Japan Patent Office<br>3-4-3, Kasumigaseki, Chiyoda-ku,<br>Tokyo 100-8915, Japan | Authorized officer |
| | Telephone No. |

Form PCT/ISA/210 (second sheet) (January 2015)

**INTERNATIONAL SEARCH REPORT**

| International application No. |
| --- |
| PCT/JP2020/025101 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2013-091573 A (PANASONIC CORP.) 16 May 2013, paragraphs [0058]-[0072], examples 3, 4, comparative examples 3, 4 | 1-6 |
| A | 細粒・微粒ハイジライト. [online] [retrieved on 07 September 2020], Showa Denko K.K., Internet: <URL:https://www.sdk.co.jp/assets/files/products/1203/1203_01.pdf>, Quality-Representing Features (H-32), non-official translation (Fine-Grain/Particle Hygilite.) | 1-6 |
| A | 特殊加工ハイジライト. [online] [retrieved on 07 September 2020], Showa Denko K.K., Internet: <URL:https://www.sdk.co.jp/assets/files/products/1204/1204_01.pdf>, Quality-Representing Features (H-34), non-official translation (Specially Processed Hygilite.) | 1-6 |
| A | 高白色ハイジライト. [online] [retrieved on 07 September 2020], Showa Denko K.K., Internet: <URL:https://www.sdk.co.jp/assets/files/products/1202/1202_01.pdf>, Quality-Representing Features (H-310, H-320), non-official translation (Ultra-White Hygilite.) | 1-6 |

Form PCT/ISA/210 (continuation of second sheet) (January 2015)

INTERNATIONAL SEARCH REPORT
Information on patent family members

International application No.

PCT/JP2020/025101

| Patent Documents referred to in the Report | Publication Date | Patent Family | Publication Date |
|---|---|---|---|
| JP 2009-173813 A | 06.08.2009 | (Family: none) | |
| WO 2016/080040 A1 | 26.05.2016 | US 2017/0288477 A1 claims 1-3, paragraphs [0082]-[0116], examples 1-11, comparative examples 2, 4, 6 EP 3206282 A1 CN 106797151 A | |
| JP 63-041562 A | 22.02.1988 | (Family: none) | |
| JP 2013-091573 A | 16.05.2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1275422 A